# DEMANDE DE BREVET EUROPEEN

(11) **EP 1 659 336 A1**
(43) Date de publication de la demande: **24.05.2006**
(21) Numéro de dépôt: 04300799.6
(22) Date de dépôt: 17.11.2004
(51) Int. Cl.: F21V 19/04, G03B 21/20, H01R 33/00, H01K 9/06

(54) **Dispositif automatique de remplacement de lampe dans un projecteur**

(71) Demandeur: Lanetco International, 74160 Archamps (FR)
(72) Inventeur: MONOD, Rodolphe, 74270, FRANGY (FR); ZAGLIO, Michel, 74100, AMBILLY (FR)
(74) Mandataire: Gaglione, Renaud

(57) **Abrégé**

Chargeur de projecteur comprenant une lampe de service (1) montée sur un volet de service (3) actionné (29) en pivotement par l'intermédiaire d'un moyen de commande (7,23) pour faire pivoter la lampe de service d'une position de service à une position de repos et une lampe de remplacement (9) pivotant d'une position d'attente à la position de service.

Selon l'invention, la lampe de remplacement (9) est montée sur un volet de remplacement (11), les deux volets (3,11) étant actionnés en pivotement autour de deux axes disposés perpendiculairement (13,15) et des moyens retardateurs (17,19,27) sont prévus pour que le volet de remplacement (11) pivote en retard par rapport au pivotement du volet de service (3).

## Description

### Domaine technique

L'invention se rapporte à un chargeur de projecteur comprenant plus particulièrement deux lampes, l'une dite de service et l'autre dite de remplacement.

Dans un état normal de fonctionnement du chargeur de projecteur, la lampe de service occupe une position de service dans laquelle la lumière émise est dirigée vers une optique du projecteur tandis que la lampe de remplacement occupe une position d'attente. Si la lampe de service cesse d'émettre de la lumière, elle pivote de la position de service à une position de repos tandis que la lampe de remplacement pivote de la position d'attente à la position de service. Ainsi, l'optique du projecteur est à nouveau illuminée par la lampe de remplacement.

Pour recouvrer l'état normal de fonctionnement, la lampe de service doit être retirée du chargeur de projecteur pour être remplacée par une nouvelle lampe de service en état de marche. La lampe de remplacement doit ensuite pivoter de la position de service à la position d'attente et enfin la nouvelle lampe de service doit pivoter de la position de repos à la position de service.

### Etat de la technique

Un chargeur de projecteur de ce type est connu du document US 5980053. Il comprend une lampe de service montée sur un volet de service actionné en pivotement par l'intermédiaire d'un moyen de commande pour faire pivoter la lampe de service d'une position de service à une position de repos . Plus particulièrement, une tringle commande en pivotement un crochet pour libérer le volet de service et permettre son pivotement par la détente d'un ressort à pattes. En fonctionnement normal, le volet de service est maintenu par le crochet dans la position de service en alignement avec une lentille. Une lampe de remplacement est montée sur le même volet pour pivoter d'une position d'attente à la position de service.

Cet agencement permet à la lampe de remplacement de pivoter automatiquement lorsque la lampe de service est actionnée en pivotement par l'intermédiaire du moyen de commande. Toutefois, un tel chargeur de projecteur n'apparaît pas compact, dans la mesure où le volume occupé par le volet est deux fois plus important approximativement que celui qu'il occuperait pour une seule lampe.

### Divulgation de l'invention

Le but de l'invention est de modifier un chargeur de projecteur d'un type rappelé ci-dessus pour le rendre plus compact tout en conservant la possibilité de faire automatiquement pivoter la lampe de remplacement lorsque la lampe de service est actionnée en pivotement par l'intermédiaire du moyen de commande.

A cet effet, l'invention a pour objet un chargeur de projecteur comprenant une lampe de service montée sur un volet de service actionné en pivotement par l'intermédiaire d'un moyen de commande pour faire pivoter la lampe de service d'une position de service à une position de repos et une lampe de remplacement pivotant d'une position d'attente à la position de service, caractérisé en ce que la lampe de remplacement est montée sur un volet de remplacement, les deux volets étant actionnés en pivotement autour de deux axes perpendiculaires et en ce que des moyens retardateurs sont prévus pour que le volet de remplacement pivote en retard par rapport au pivotement du volet de service.

Par cet agencement, le volume occupé par les deux volets est du même ordre de grandeur que celui balayé par l'un ou l'autre de ces volets au cours de leur pivotement. D'où il résulte une augmentation de la compacité du chargeur de projecteur selon l'invention. De surcroît, les moyens retardateur permettent d'automatiser le pivotement du volet de remplacement lorsque le volet de service est actionné en pivotement par l'intermédiaire du moyen de commande.

Ainsi, selon un premier mode avantageux de réalisation de l'invention, les moyens retardateurs sont conformés pour établir un contact glissant ou roulant entre les deux volets, bloquant le pivotement du volet de remplacement par rapport au pivotement du volet de service pendant une première phase du pivotement et pour rompre ce contact et débloquer le pivotement du volet de remplacement dans une deuxième phase du pivotement du volet de service. De préférence, ces moyens retardateurs comprennent un galet ou une pointe à bille de l'un des volets et une rampe de l'autre volet s'étendant entre deux extrémités pour établir puis rompre le contact glissant ou roulant avec le galet ou la pointe à bille.

Dans ce premier mode d'exécution, le moyen de commande comprend de préférence une unité de contrôle-commande pour une opération autonome du chargeur de projecteur. Cette unité reçoit un signal de défaillance émis par la lampe de service et envoie un signal d'actionner en pivotement le volet de service sur un premier moyen d'actionnement.

Selon un deuxième mode avantageux de réalisation de l'invention, les moyens retardateurs comprennent une temporisation électronique. L'unité électronique de contrôle-commande décrite en relation avec le premier mode d'exécution est requise et permet en outre d'envoyer un signal d'actionner en pivotement le volet de remplacement sur un deuxième moyen d'actionnement avec un retard par rapport au signal d'actionner en pivotement le volet de service, imposé par la temporisation électronique. Dans une première exécution du premier ou du deuxième mode de réalisation de l'invention, le premier ou le deuxième moyen d'actionnement comprend un premier ou un deuxième électroaimant relié à l'unité de contrôle-commande et respectivement un premier ou un deuxième moyen élastique se détendant lorsque le premier ou le deuxième électroaimant reçoit le signal d'actionner en pivotement le volet de service ou le volet de remplacement envoyé par l'unité électronique de contrôle-commande.

Dans une deuxième exécution du premier ou du deuxième mode de réalisation de l'invention, le premier ou le deuxième moyen d'actionnement comprend un premier ou un deuxième vérin électrique relié l'unité de contrôle-commande.

De préférence, les volets de service et de remplacement sont actionnés en pivotement par des ressorts à gaz.

D'autres avantages de l'invention apparaîtront à la lecture de la description de l'invention illustrée par les dessins.

### Brève description des dessins

La figure 1 est une vue éclatée d'une première exécution d'un chargeur de projecteur selon l'invention et d'un projecteur auquel il est destiné.

La figure 2 est une vue d'un chargeur de projecteur selon l'invention montrant une lampe de service en position de service et une lampe de remplacement en position d'attente.

La figure 3 est une vue du chargeur de projecteur de la figure 2, montrant un instant où la lampe de service a pivoté partiellement de la position de service à la position de repos et la lampe de remplacement n'a pas encore pivoté.

La figure 4 est une vue du chargeur de projecteur de la figure 2, montrant un instant où la lampe de service a pivoté complètement dans la position de repos et la lampe de remplacement a pivoté partiellement de la position d'attente à la position de service.

La figure 5 est une vue du chargeur de projecteur de la figure 2, montrant la lampe de service dans la position de repos et la lampe de remplacement dans la position de service.

La figure 6 est une vue du chargeur de projecteur de la figure 2, montrant artificiellement la lampe de service dans la position de repos et la lampe de remplacement dans la position d'attente.

La figure 7 est une vue d'un volet de service.

La figure 8 est une vue d'un volet de remplacement.

La figure 9 est une vue d'une deuxième exécution d'un chargeur de projecteur selon l'invention.

La figure 10 est une vue d'une troisième exécution d'un chargeur de projecteur selon l'invention.

### Mode(s) de réalisation de l'invention

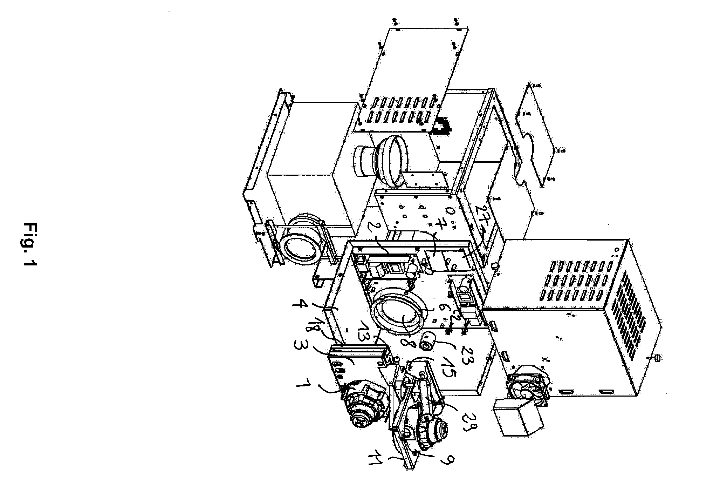

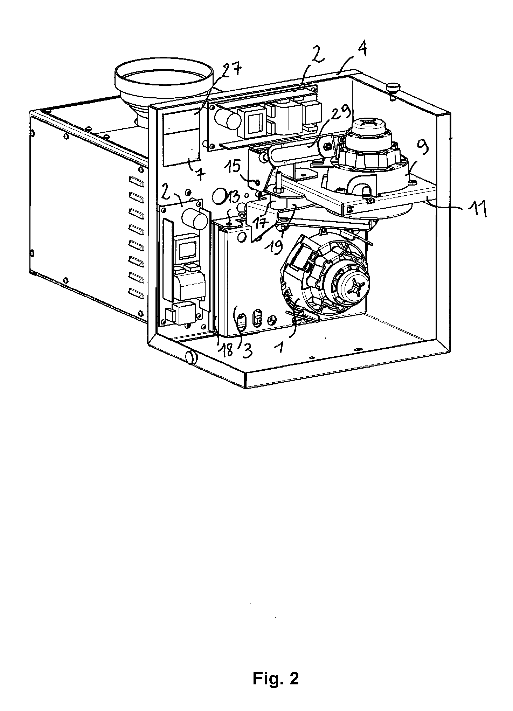

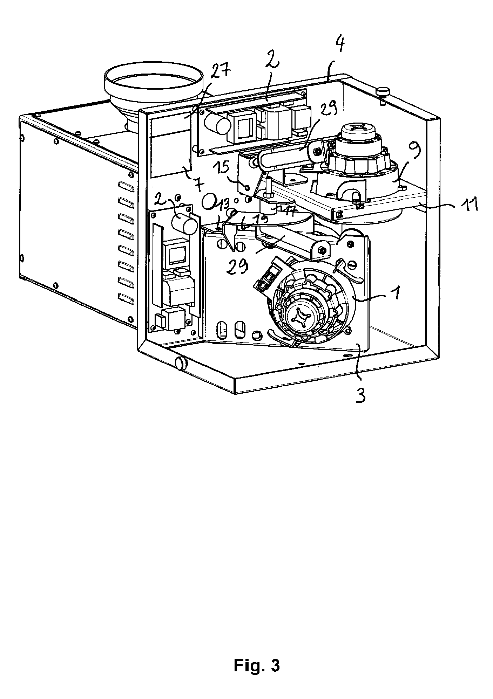

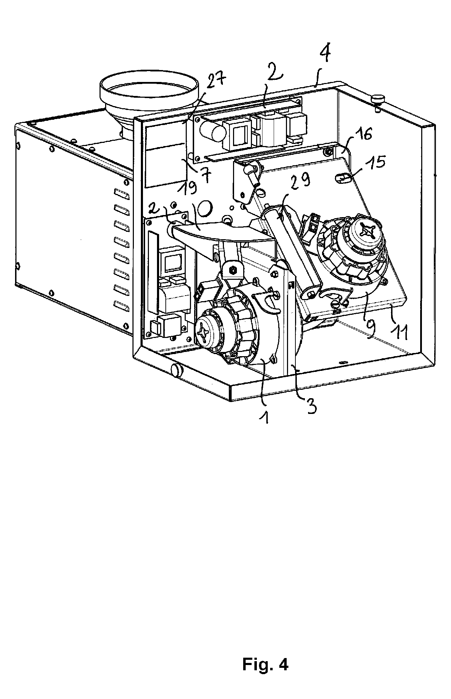

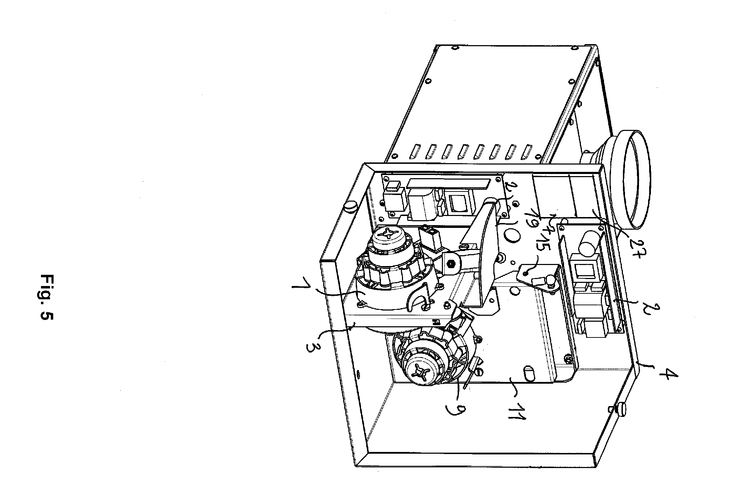

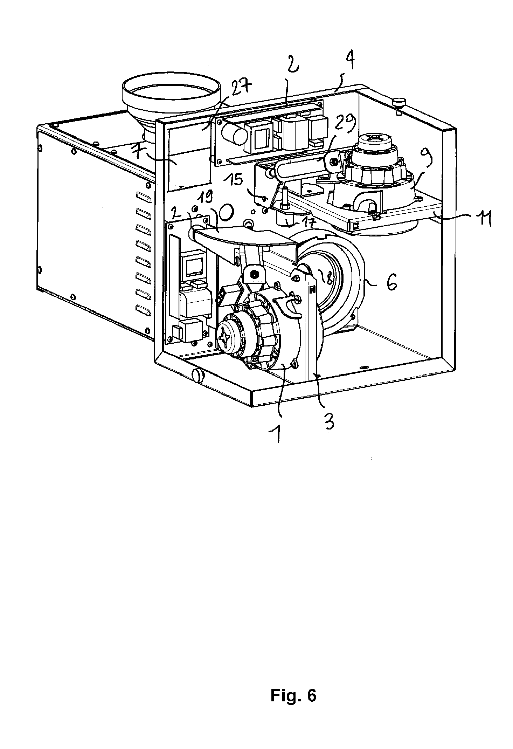

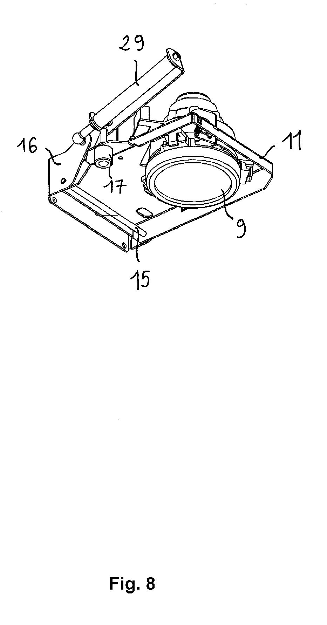

En référence aux figures 1 à 8, un chargeur de projecteur comprend une lampe de service 1 montée sur un volet de service 3 actionné en pivotement par l'intermédiaire d'un moyen de commande pour faire pivoter la lampe de service d'une position de service à une position de repos .

Le projecteur auquel le chargeur est destiné est par exemple un rétro-projecteur fonctionnant suivant un principe de lumière digitalisée, dit DLP, suivant un principe d'écrans à cristaux liquides, dit LCD ou encore à cristaux liquides sur silicium, dit LCOS. Le rétro-projecteur est utilisé seul ou juxtaposé à d'autres rétro-projecteurs identiques pour former un mur d'images.

La lampe de service 1 est par exemple une lampe à très haute pression, dite UHP. Un bloc d'alimentation 2 équipe la lampe de service 1.

Le volet de service 3 peut être actionné en pivotement par rapport à un support 14 fixé à un carter 4, au moyen d'un ressort à pattes inséré suivant l'axe de rotation 13 du volet. De préférence, il est actionné par un ressort à gaz 29 pour conférer une plus grande souplesse au pivotement et diminuer ainsi le risque d'endommager la lampe de service 1 par une accélération trop rapide ou un arrêt trop brutal. Le volet de service 3 s'étend approximativement parallèlement au carter 4 lorsque la lampe de service 1 est dans la positon de service.

Selon l'invention, une lampe de remplacement 9 pivote d'une position d'attente à la position de service en étant montée sur un volet de remplacement 11, les deux volets 3,11 étant actionnés en pivotement autour de deux axes disposés perpendiculairement 13,15. Des moyens retardateurs 17,19 sont prévus pour que le volet de remplacement 11 pivote en retard par rapport au pivotement du volet de service 3.

La lampe de remplacement 9 est en général du même type que celui de la lampe de service 1. Le volet de remplacement 11 est actionné en pivotement par rapport à un support 16 fixé au carter 4, au moyen d'un ressort à pattes inséré autour de son axe de rotation 15 ou de préférence par un ressort à gaz 29 pour les raisons exposées précédemment. Le volet de remplacement 11 s'étend approximativement perpendiculairement au carter 4 lorsque la lampe de remplacement 11 est dans la position d'attente.

La disposition des axes de rotation des deux volets, perpendiculaires l'un par rapport à l'autre, permet de diminuer l'encombrement du chargeur par rapport à un agencement où les deux lampes sont montées sur un même volet pivotant. Ainsi, le pivotement du volet de service et du volet de remplacement est approximativement d'un même angle de 90 degrés lorsque la lampe de service quitte la position de service pour la position de repos et que la lampe de remplacement quitte la position d'attente pour la position de service. D'où il résulte que le chargeur de projecteur selon l'invention est plus compact et cette plus grande compacité est particulièrement avantageuse dans le cas de rétro-projecteurs juxtaposés pour former un mur d'images.

Les moyens retardateurs sont conformés, dans ce premier mode d'exécution de l'invention, pour établir un contact glissant ou roulant entre les deux volets 3,11, bloquant le pivotement du volet de remplacement 11 par rapport au pivotement du volet de service 3 pendant une première phase du pivotement et pour rompre ce contact et débloquer le pivotement du volet de remplacement 11 dans une deuxième phase du pivotement du volet de service 3. Les moyens retardateurs 17,19 comprennent de préférence un galet 17 solidaire du volet de remplacement 11 et une rampe 19 solidaire du volet de service 3 s'étendant entre deux extrémités 10 et 12 pour établir puis rompre le contact glissant ou roulant avec le galet ou la pointe à bille. Dans ce mode d'exécution, l'étendue de la rampe 19 entre les deux extrémités 10 et 12 de laquelle le contact glissant ou roulant est établi avant d'être rompu détermine le retard avec lequel le volet de remplacement 11 pivote par rapport au pivotement du volet de service 3. Aussi longtemps que le pivotement du volet de remplacement 11 est bloqué par le galet 17 au contact de la rampe 19, la lampe de remplacement 9 se trouve dans la position d'attente.

Le galet 17 peut être remplacé par une pointe à bille pour minimiser le frottement sur la rampe 19.

Le moyen de commande peut être mécanique et opéré à la main, à l'exemple de celui décrit dans le document cité précédemment.

Pour une opération autonome, c'est à dire sans intervention manuelle, on prévoit un moyen de commande comprenant une unité électronique de contrôle-commande 7 pour recevoir un signal de défaillance émis par le bloc d'alimentation 2 de la lampe de service 1 et pour envoyer un signal d'actionner en pivotement le volet de service 3 sur un premier électroaimant 23 relié à l'unité de contrôle-commande 7. Aussi longtemps que la lampe de service 1 n'envoie pas de signal de défaillance vers l'unité électronique de contrôle-commande 7, l'électroaimant 23, fixé sur un carter 4, maintient le volet de service 3 en appui contre ce carter 4 contre la compression du ressort à gaz 29. Dans cette position de service, la lampe de service 1 est avantageusement insérée en partie dans un cache 6 attenant à une lentille 8 fixée au carter 4 pour diminuer les pertes d'illumination.

Lorsque la lampe de service 1 envoie un signal de défaillance, l'électroaimant 23 reçoit de l'unité électronique de contrôle-commande 7, un signal autorisant le pivotement du volet de service 3 et libère le ressort à gaz 29 qui se détend. Le volet de service 3 pivote ensuite pour faire passer la lampe de service 1 dans la position de repos définie par exemple par une butée 18 formée sur le support 14 du volet de service 3 et correspondant à un pivotement d'environ 90 degrés.

Les moyen retardateurs prévus pour ce premier mode d'exécution de l'invention sont simples et particulièrement fiables puisque le retard est garanti par l'établissement du contact glissant ou roulant entre les deux volets. Une autre exécution de l'invention est cependant possible sans faire intervenir un tel contact.

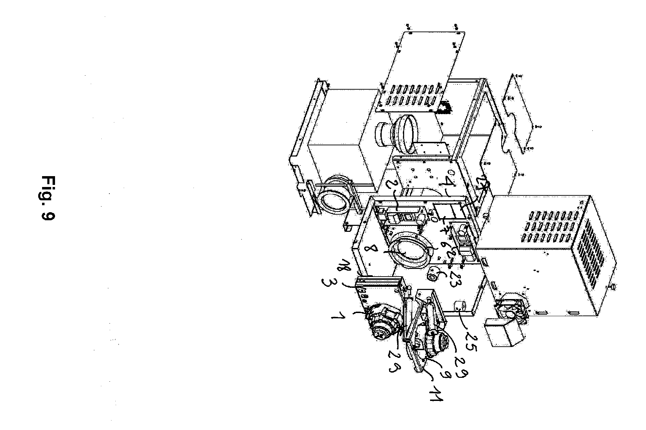

Ainsi, selon un deuxième mode avantageux de réalisation de l'invention, figure 9, les moyens retardateurs comprennent une temporisation électronique 27. L'unité électronique de contrôle-commande décrite en relation avec le premier mode d'exécution est requise et permet en outre d'envoyer un signal d'actionner en pivotement le volet de remplacement 11 sur un deuxième électroaimant 25 avec un retard par rapport au signal d'actionner en pivotement le volet de service 3, imposé par la temporisation électronique 27. Le deuxième électroaimant 25 est relié à l'unité de contrôle-commande 7 et, en l'absence de signal de défaillance de la lampe de service 1, s'oppose au pivotement du volet de remplacement 11 et maintient la lampe de remplacement 9 dans la position d'attente, approximativement perpendiculairement au carter 4. Le deuxième ressort à gaz 29 se détend lorsque le deuxième électroaimant 25 reçoit le signal d'actionner en pivotement le volet de remplacement 11 envoyé par l'unité électronique de contrôle-commande 7.

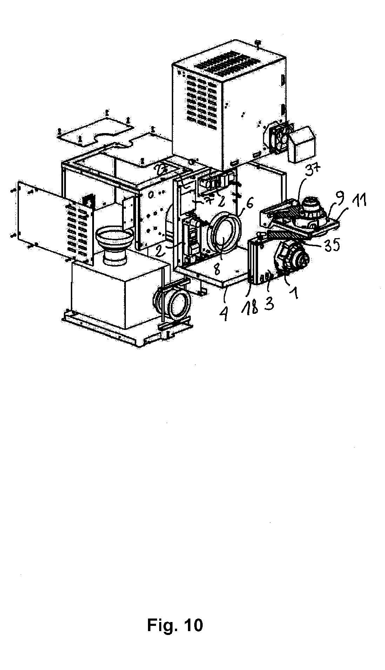

Dans une exécution du premier ou du deuxième mode de réalisation de l'invention, figure 10, le premier ou le deuxième moyen d'actionnement en pivotement du volet de service 3 ou du volet de remplacement 11 comprend un premier 35 ou un deuxième 37 vérin électrique relié à l'unité de contrôle-commande. Le premier vérin électrique 35 actionne le volet de service 3 en pivotement de 90 degrés environ, d'un contact avec le carter 4 à un contact avec la butée 18, pour faire passer la lampe de service 1 de la position de service à la position de repos. Le deuxième vérin électrique 37 maintient le volet de remplacement 11 approximativement perpendiculairement au carter 4 aussi longtemps qu'il ne reçoit pas de signal d'actionnement de la part de l'unité électronique de contrôle-commande 7. En présence de ce signal, il actionne ce volet 11 en pivotement de 90 degrés environ pour faire passer la lampe de remplacement 11 de la positon d'attente à la position de service.

La temporisation électronique 27 est par exemple intégrée à l'unité électronique de contrôle-commande 7.

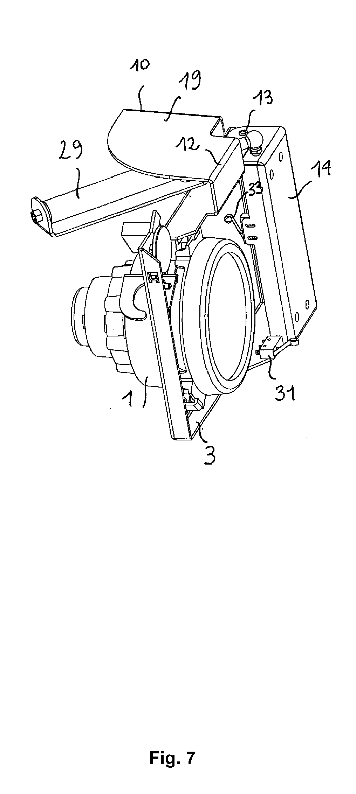

Le chargeur de projecteur comprend de préférence des capteurs de position 31,33 pour détecter le volet de service 3 ou le volet de remplacement 11 lorsque respectivement la lampe de service 1 ou la lampe de remplacement 9 est dans la position de service . Figure 7, l'un 31 de ces capteurs est fixé au volet de service 3 pour venir en contact avec le carter 4 lorsque la lampe de service est dans la position de service. L'autre capteur 33 est fixé au support 14 du volet de service 3 pour établir un contact avec le volet de remplacement 11 lorsque la lampe de remplacement est dans la position de service.

Ces capteurs sont avantageusement reliés à l'unité électronique de contrôle-commande 7 pour contrôler si le volet de remplacement 11 a bien été automatiquement actionné en pivotement lorsque le volet de service 3 a été actionné en pivotement par l'intermédiaire de l'unité électronique de contrôle-commande 7.

Dans les deux modes d'exécution de l'invention, le chargeur de projecteur recouvre son état de fonctionnement normal lorsqu'une nouvelle lampe de service en état de marche occupe la position de service et où la lampe de remplacement occupe la position d'attente.

Il convient de rappeler qu'un chargeur de projecteur selon l'invention peut être rendu plus compact que ceux du même type connus dans l'état de la technique tout en conservant la possibilité de faire automatiquement pivoter la lampe de remplacement lorsque la lampe de service est actionnée en pivotement par l'intermédiaire du moyen de commande. Un chargeur de projecteur selon l'invention permet avantageusement de remplacer la lampe de service défaillante rapidement et d'une façon autonome et fiable. Il est particulièrement bien adapté à une utilisation dans laquelle plusieurs projecteurs équipés chacun d'un chargeur selon l'invention sont juxtaposés.

## Revendications

1. Chargeur de projecteur comprenant une lampe de service (1) montée sur un volet de service (3) actionné (29,35,37) en pivotement par l'intermédiaire d'un moyen de commande (7,23,25) pour faire pivoter la lampe de service d'une position de service à une position de repos et une lampe de remplacement (9) pivotant d'une position d'attente à la position de service, **caractérisé en ce que** la lampe de remplacement (9) est montée sur un volet de remplacement (11), les deux volets (3,11) étant actionnés en pivotement autour de deux axes perpendiculaires (13,15) et **en ce que** des moyens retardateurs (17,19,27) sont prévus pour que le volet de remplacement (11) pivote en retard par rapport au pivotement du volet de service (3).

2. Chargeur de projecteur selon la revendication 1, **caractérisé en ce que** les moyens retardateurs (17,19) sont conformés pour établir un contact glissant ou roulant entre les deux volets (3,11), bloquant le pivotement du volet de remplacement (11) par rapport au pivotement du volet de service (3) pendant une première phase du pivotement et pour rompre ce contact et débloquer le pivotement du volet de remplacement (11) dans une deuxième phase du pivotement du volet de service (3).

3. Chargeur de projecteur selon la revendication 2, **caractérisé en ce que** les moyens retardateurs (17,19) comprennent un galet ou une pointe à bille (17) de l'un des volets et une rampe (19) de l'autre volet s'étendant entre deux extrémités pour établir puis rompre le contact glissant ou roulant avec le galet ou la pointe à bille.

4. Chargeur de projecteur selon la revendication 1, 2 ou 3, **caractérisé en ce que** le moyen de commande comprend une unité électronique de contrôle-commande (7) pour recevoir un signal de défaillance émis par la lampe de service (1) et pour envoyer un signal d'actionner en pivotement le volet de service (3) sur un premier moyen d'actionnement (35,23,29).

5. Chargeur de projecteur selon la revendication 4, **caractérisé en ce que** les moyens retardateurs comprennent une temporisation électronique (27) et **en ce que** l'unité électronique de contrôle-commande (7) envoie un signal d'actionner en pivotement le volet de remplacement (11) sur un deuxième moyen d'actionnement (37,25,29) avec un retard par rapport au signal d'actionner en pivotement le volet de service (3), imposé par la temporisation électronique (27).

6. Chargeur de projecteur selon la revendication 4 ou 5, **caractérisé en ce que** le premier ou le deuxième moyen d'actionnement comprend un premier (35) ou un deuxième (37) vérin électrique relié l'unité de contrôle-commande (7).

7. Chargeur de projecteur selon la revendication 4 ou 5, **caractérisé en ce que** le premier ou le deuxième moyen d'actionnement comprend un premier (23) ou un deuxième (25) électroaimant relié à l'unité de contrôle-commande (7) et respectivement un premier ou un deuxième moyen élastique (29) se détendant lorsque le premier (23) ou le deuxième électroaimant (25) reçoit le signal d'actionner en pivotement le volet de service (3) ou le volet de remplacement (11) envoyé par l'unité électronique de contrôle-commande (7).

8. Chargeur de projecteur selon la revendication 1, 4 ou 5, **caractérisé en ce qu'**il comprend des capteurs de position (31,33) pour détecter le volet de service (3) ou le volet de remplacement (11) lorsque respectivement la lampe de service (1) ou la lampe de remplacement (9) est dans la position de service (S).

9. Chargeur de projecteur selon la revendication 1, 4 ou 5, **caractérisé en ce que** les volets de service (3) et de remplacement (11) sont actionnés en pivotement par des ressorts à gaz (29).
